# EUROPÄISCHE PATENTSCHRIFT

(11) **EP 4 200 211 B1**
(45) Veröffentlichungstag und Bekanntmachung des Hinweises auf die Patenterteilung: **04.12.2024**
(21) Anmeldenummer: 21765639.6
(22) Anmeldetag: 19.08.2021
(51) Int. Cl.: B64D 11/00, B64D 47/02, B64D 45/00

(54) **KABINE FÜR EIN FLUGZEUG MIT EINER ÜBERWACHUNGSANORDNUNG, FLUGZEUG MIT DER KABINE, ÜBERWACHUNGSANORDNUNG UND VERFAHREN ZUR ÜBERWACHUNG EINER KABINE EINES FLUGZEUGS**
CABIN FOR AN AIRCRAFT, HAVING A MONITORING ASSEMBLY, AIRCRAFT HAVING THE CABIN, MONITORING ASSEMBLY AND METHOD FOR MONITORING A CABIN OF AN AIRCRAFT
CABINE DESTINÉE À UN AÉRONEF COMPRENANT UN DISPOSITIF DE SURVEILLANCE, AÉRONEF COMPRENANT LA CABINE, DISPOSITIF DE SURVEILLANCE ET PROCÉDÉ DE SURVEILLANCE D'UNE CABINE D'UN AÉRONEF

(30) Priorität: 20.08.2020 DE 102020210572
(43) Veröffentlichungstag der Anmeldung: 28.06.2023
(73) Patentinhaber: Diehl Aerospace GmbH, 88662 Überlingen (DE); Diehl Aviation Laupheim GmbH, 88471 Laupheim (DE)
(72) Erfinder: FUCHTE, Jörg, 22767 Hamburg (DE); SCHMEDES, Marcel, 61206 Wöllstadt (DE); JIRSCH, Michael, 65205 Wiesbaden (DE)
(74) Vertreter: Diehl Patentabteilung
(86) Internationale Anmeldenummer: PCT/EP2021/073042
(87) Internationale Veröffentlichungsnummer: WO 2022/038227

(56) Entgegenhaltungen:
- US-A1- 2017 316 664
- US-A1- 2020 169 844
- US-B2- 9 302 781

## Beschreibung

Die Erfindung betrifft eine Kabine für ein Flugzeug mit einer Überwachungsanordnung zur Überwachung eines ersten Überwachungsbereichs und eines zweiten Überwachungsbereichs. Die Erfindung betrifft weiterhin ein Flugzeug mit der Kabine und ein Verfahren zur Überwachung einer Kabine eines Flugzeugs.

Es sind bereits Flugzeuge bekannt, in denen Überwachungssysteme zur Überwachung von Sitzen eingesetzt werden. Beispielsweise beschreibt die Druckschrift DE 10 2006 042 299 A1 ein bedingtes Warn- und Meldesystem für eine Flugzeugkabine zur Feststellung des Kabinenstatus. Im Rahmen eines Überwachungsverfahrens zur Überwachung eines Sitzzustands wird ein Sitzbelegungszustand eines Sitzelements mittels eines Sitzbelegungssensors und ein Anschnallzustand des Sitzelements mittels eines Anschnallsensors gemessen und an eine Überwachungseinrichtung übermittelt. Diese kann ein Warnsignal bei einer Kombination eines vorbestimmten Sitzbelegungszustands und Anschnallzustands erzeugen.

Aus der US 2020/169844 A1 sind Systeme und Methoden bekannt, um Personen in überfüllten und unbekannten Umgebungen wie Flugzeugkabinen, Stadien und Theatern Navigationsführung zu bieten. Eine "Aktivierungsanordnung" kann erstellt werden, um verschiedene Beleuchtungsgeräte, persönliche elektronische Geräte und/oder andere Geräte dynamisch zu aktivieren, um die Person von einem aktuellen Standort zu einem Ziel zu führen, beispielsweise einem Sitzplatz, einem Eingang oder einer Toilette. Diese Techniken können basierend auf den bestehenden Bedingungen in der Umgebung und/oder basierend auf benutzerpersonalisierten Einstellungen angepasst werden, um den Komfort von Personen in diesen Umgebungen zu verbessern.

Es ist Aufgabe der Erfindung, eine Kabine mit einer funktional erweiterten Überwachungsanordnung bereitzustellen. Diese Aufgabe wird durch eine Kabine für ein Flugzeug mit einer Überwachungsanordnung mit den Merkmalen des Anspruchs 1, durch ein Flugzeug mit der Kabine gemäß dem Anspruch 7 und durch ein Verfahren zur Überwachung einer Kabine eines Flugzeugs mit den Merkmalen des Anspruchs 8 gelöst. Bevorzugte oder vorteilhafte Ausführungsformen der Erfindung ergeben sich aus den Ansprüchen, der Beschreibung und/oder den beigefügten Figuren.

Es wird eine Kabine für ein Flugzeug, insbesondere für die zivile Luftfahrt, vorgeschlagen. Beispielsweise ist die Kabine als eine Passagierkabine mit mindestens einem Waschraum und/oder mit mindestens einer Eingangstür, durch die das Flugzeug und/oder die Kabine betretbar sind, ausgebildet.

Die Kabine weist einen ersten Überwachungsbereich und einen zweiten Überwachungsbereich auf. Die Kabine umfasst eine Überwachungsanordnung. Die Überwachungsanordnung ist dazu ausgebildet, den ersten Überwachungsbereich und den zweiten Überwachungsbereich zu überwachen. Vorzugsweise ist Überwachungsanordnung dazu ausgebildet, einen Personenfluss in der Kabine zu überwachen und/oder zu steuern. Insbesondere ist die Überwachungsanordnung dazu ausgebildet, zu überwachen und zu steuern, wie viele Personen sich an welcher Position in dem ersten Überwachungsbereich und in dem zweiten Überwachungsbereich aufhalten und/oder wieviele Personen sich in dem ersten und/oder zweiten Überwachungsbereich aufhalten.

Die Überwachungsanordnung umfasst mindestens eine Ausgabeeinrichtung. Die mindestens eine Ausgabeeinrichtung ist dazu ausgebildet und/oder angeordnet, ein Freigabesignal oder ein Verbotssignal über eine Veränderung der Position und/oder einer Anwesenheit mindestens einer Person in dem ersten Überwachungsbereich und/oder in dem zweiten Überwachungsbereich auszugeben. Vorzugsweise ist/wird das Freigabesignal durch die mindestens eine Ausgabeeinrichtung ausgebbar/ ausgegeben, wenn eine Veränderung der Position und/oder der Anwesenheit mindestens einer Person in dem ersten Überwachungsbereich und/oder in dem zweiten Überwachungsbereich zulässig oder zugestanden ist. Insbesondere ist/wird das Verbotssignal durch die mindestens eine Ausgabeeinrichtung ausgebbar/ausgegeben, wenn eine Veränderung der Position und/oder der Anwesenheit mindestens einer Person in dem ersten Überwachungsbereich und/oder in dem zweiten Überwachungsbereich unzulässig oder untersagt ist.

Vorteilhaft ist, dass der Personenfluss in der Kabine, welcher z.B. durch sich in der Kabine aufhaltende und/oder bewegende Passagiere, Crew und/oder Bordpersonal gebildet ist, durch die Ausgabe des Freigabesignals oder des Verbotssignals geregelt werden kann. Dadurch kann eine Einhaltung notwendiger Abstände zwischen den Personen gewährleistet werden, zum Beispiel um ein Infektionsgeschehen zwischen den Personen zu vermeiden. Insbesondere können Ansammlungen mehrere Personen in engen Bereichen der Kabine vermieden werden.

In einer bevorzugten Ausführungsform der Erfindung ist oder umfasst das Freigabesignal und/oder das Verbotssignal ein optisches Signal. Optional ist die Ausgabeeinrichtung als eine Leuchte ausgebildet. Vorzugsweise strahlt die Leuchte das optische Signal in Form von Licht aus und/oder sie gibt das optische Signal als ein Symbol, insbesondere als ein beleuchtetes Symbol, aus. Insbesondere kann die Leuchte eine An-Aus-Leuchte sein, welche entweder das Verbotssignal oder das Freigabesignal anzeigen kann. Bevorzugt ist es, dass die Leuchte das Verbotssignal anzeigt. Wenn dieses erlöscht, bedeutet es die Freigabe zur Veränderung der Position und/oder der Anwesenheit der mindestens einen Person in dem jeweiligen Überwachungsbereich.

Besonders bevorzugt ist es im Rahmen der Erfindung, dass die Ausgabeeinrichtung als eine Ampel ausgebildet ist. Vorzugsweise ist die Ampel dazu ausgebildet, eine erste Signalfarbe als das Freigabesignal anzuzeigen. Bei der ersten Signalfarbe kann es sich zum Beispiel um die Farbe Grün handeln. Insbesondere ist die Ampel dazu ausgebildet, eine zweite Signalfarbe als das Verbotssignal anzuzeigen. Bei der zweiten Signalfarbe kann es sich zum Beispiel um die Farbe Rot handelt. Die Ausgabeeinrichtung als Ampel kann optional eine dritte Signalfarbe anzeigen. Bei der dritten Signalfarbe kann es sich zum Beispiel um die Farbe Orange handeln. Bevorzugt symbolisiert die dritte Signalfarbe ein Wartesignal, welches der mindestens einen Person anzeigt, dass das Verbotssignal oder das Freigabesignal zeitnah erlöschen wird.

Optional ergänzend ist die Ausgabeeinrichtung dazu ausgebildet, zusätzlich zu dem optischen Signal mindestens ein akustisches Signal auszugeben. Das akustische Signal kann z.B. ein Geräusch, ein Ton, eine Tonfolge oder eine Sprachnachricht sein. Es kann die mindestens einen Person auf die Ausgabe des optischen Signals hinweisen und somit ein Übersehen des Verbotssignals und/oder des Freigabesignals vermeiden. Vorzugsweise ertönt das akustisches Signal, zum Beispiel in Form eines Hinweistons, zeitgleich oder nahezu zeitgleich mit der Anzeige des optischen Signals. Möglich ist auch, dass das akustische Signal an das angezeigte optische Signal angepasst ist. Insbesondere ertönt ein Verbots-Hinweiston wenn das Verbotssignal angezeigt wird und ein davon unterschiedlicher Freigabe- Hinweiston wenn das Freigabesignal angezeigt wird.

Die Kabine umfasst einen Sitzbereich mit mehreren Sitzen. Vorzugsweise können Passagiere des Flugzeugs auf den Sitzen Platz nehmen. Die Überwachungsanordnung umfasst mehrere Ausgabeeinrichtungen. Allen Sitzen des Sitzbereichs ist genau eine Ausgabeeinrichtung zugeordnet. Vorzugsweise ist die jeweilige Ausgabeeinrichtung oberhalb des Sitzes in der Kabine angeordnet. Zum Beispiel ist die Ausgabeeinrichtung in dem Versorgungskanal der Kabine integriert, welcher insbesondere in einem Überkopfbereich des zugeordneten Sitzes angeordnet ist. In dem Versorgungskanal und/oder Überkopfbereich können insbesondere auch Lüftungsöffnungen und/oder Anzeigen wie Anschnallzeichen integriert sein können. Somit kann die auf dem jeweiligen Sitz sitzende Person das durch die Ausgabeeinrichtung ausgegebene Freigabesignal oder Verbotssignal gut erkennen.

Der erste Überwachungsbereich umfasst mindestens einen Gang, welcher zwischen den Sitzen des Sitzbereichs angeordnet ist und/oder zwischen diesen verläuft. Insbesondere bewegen sich Passagiere des Flugzeugs von den Sitzen aus durch den Gang, um in mindestens einen Aufenthalts- und/oder Funktionsbereich des Flugzeugs zu gelangen und von dem Aufenthalts- und/oder Funktionsbereich zurück zu den Sitzen zu gelangen.

Der zweite Überwachungsbereich umfasst den Aufenthalts- und/oder Funktionsbereich des Flugzeugs. Dieser kann zum Beispiel mindestens ein Waschraum der Kabine und/oder mindestens ein Wartebereich vor dem Waschraum sein. Alternativ oder optional ergänzend kann der Aufenthalts- und/oder Funktionsbereich einen Eingangs- und/oder Ausgangsbereich mindestens einer Flugzeugtür der Kabine umfassen.

Die Kabine mindestens umfasst einen weiteren Überwachungsbereich. Der mindestens eine weitere Überwachungsbereich umfasst mehrere oder alle Sitze des Sitzbereichs.

Die Überwachungsanordnung umfasst eine erste Sensorvorrichtung. Die erste Sensorvorrichtung ist dazu ausgebildet und/oder angeordnet, die Anwesenheit und/oder Position mindestens einer Person in dem ersten Überwachungsbereich als erste Sensordaten zu erfassen. Vorzugsweise sind der oder die ersten Sensoren dazu ausgebildet und/oder angeordnet, zu erfassen, ob sich mindestens eine Person in dem mindestens Gang zwischen den Sitzen des Sitzbereichs aufhält und/oder diesen entlanggeht. Der oder die ersten Sensoren können hierzu z.B. in einer Kabinendecke und/oder Kabinenwand integriert sein. Alternativ oder optional ergänzend können der oder die ersten Sensoren im Bereich eines Überkopfgepäckfachs und/oder in einer seitlichen, insbesondere zu dem mindestens einen Gang gerichteten Sitzstruktur mehrerer oder aller Sitze integriert sein.

Die Überwachungsanordnung umfasst eine zweite Sensorvorrichtung. Die zweite Sensorvorrichtung ist dazu ausgebildet und/oder angeordnet, die Anwesenheit und/oder Position mindestens einer Person in dem zweiten Überwachungsbereich als zweite Sensordaten zu erfassen. Beispielsweise umfasst die zweite Sensorvorrichtung einen oder mehrere zweite Sensoren. Die mindestens eine weitere Sensorvorrichtung ist dazu ausgebildet, eine Position und/oder Anwesenheit mindestens einer Person in dem mindestens einen weiteren Überwachungsbereich als weitere Sensordaten zu erfassen. Vorzugsweise sind die zweiten Sensoren dazu ausgebildet und/oder angeordnet, zu erfassen, ob sich mindestens eine Person in dem mindestens einen weiteren Aufenthalts- und/oder Funktionsbereich der Kabine, insbesondere in dem mindestens einen Waschraum, in dem Wartebereich vor dem jeweiligen Waschraum und/oder in dem Eingangs- und/oder Ausgangsbereich der Flugzeugtür aufhält. Der oder die zweiten Sensoren können hierzu z.B. in einer Kabinendecke und/oder Kabinenwand, im Wartebereich, im Waschraum und/oder in dem Eingangs- und/oder Ausgangsbereich integriert sein. Alternativ oder optional ergänzend können der oder die zweiten Sensoren an einer Zugangstüre zu dem Waschraum und/oder an Einrichtungen in den entsprechenden Bereichen angeordnet sein.

Die Überwachungsanordnung umfasst mindestens eine weitere Sensorvorrichtung. Die mindestens eine weitere Sensorvorrichtung ist dazu ausgebildet und/oder angeordnet, die Anwesenheit und/oder Position mindestens einer Person in dem mindestens einen weiteren Überwachungsbereich als weitere Sensordaten zu erfassen. Beispielsweise umfasst die mindestens eine weitere Sensorvorrichtung mehrere weitere Sensoren. Vorzugsweise sind ein oder mehrere der weiteren Sensoren genau einem Sitz des Sitzbereichs zugeordnet. Insbesondere sind die weiteren Sensoren dazu ausgebildet und/oder angeordnet, eine Sitzbelegung des jeweiligen Sitzes zu erfassen. Der oder die weiteren Sensoren können hierzu als Drucksensoren z.B. in einem Sitzpolster des jeweiligen Sitzes integriert sein. Möglich ist es im Rahmen der Erfindung auch, dass der oder die weiteren Sensoren als Entfernungssensoren, z.B. sogenannte Time of Flight-Sensoren, oberhalb des Sitzes oder der Sitzreihe, z.B. in einem Versorgungskanal (Passenger Supply Channel, PSC) angeordnet sind.

Die Überwachungsanordnung weist eine Auswerteeinrichtung auf. Die Auswerteeinrichtung ist z.B. ein Mikrokontroller. Die Auswerteeinrichtung ist dazu ausgebildet, einen Abstand zwischen mindestens einer Person in einem der Überwachungsbereiche und mindestens einer anderen Person in einem anderen der Überwachungsbereiche zu berechnen. Insbesondere ist die Auswerteeinrichtung dazu ausgebildet, den Abstand zwischen der mindestens einen Person und der mindestens einen anderen Person auf Basis der ersten Sensordaten, der zweiten Sensordaten und/oder der weiteren Sensordaten zu berechnen.

In einer weiteren bevorzugten Umsetzung der Erfindung ist die Auswerteeinrichtung dazu ausgebildet, eine Sitzbelegung der Sitze auf Basis der weiteren Sensordaten auszuwerten. Insbesondere ist aus der Sitzbelegung erkennbar, welche Sitze des Sitzbereichs durch eine Person, z.B. einen Passagier, ein Crewmitglied und/oder ein Mitglied des Bordpersonals, besetzt sind und welche unbesetzt sind.

Beispielsweise ist die Auswerteeinrichtung in einem mobilen Rechner, zum Beispiel in einem Tablett oder Smartphone, integriert oder mit diesem kabelgebunden oder kabellos, verbunden und/oder verbindbar sein. Alternativ kann die Auswerteeinrichtung in einem fest installierter Rechner integriert sein oder mit diesem kabelgebunden oder kabellos, verbunden und/oder verbindbar sein. Vorzugsweise weist der Rechner ein Display oder einen Bildschirm auf. Insbesondere ist die Sitzbelegung der Sitze und/oder die berechneten Abstände auf dem Display oder auf dem Bildschirm abrufbar und/oder anzeigbar. Möglich ist im Rahmen der Erfindung auch, dass ein Überblick darüber anzeigbar ist, wie oft und/oder welchen Sitzen das Verbotssignal oder das Freigabesignal ausgegeben wird.

Die als Rechner ausgebildete Auswerteeinrichtung kann zum Beispiel einem Bordpersonal und/oder einer Crew des Flugzeugs zugeordnet sein und/oder von diesen benutzt werden. Vorteilhaft ist, dass das Bordpersonal und/oder die Crew anhand der angezeigten Sitzbelegung und/oder den Abständen einen schnellen und sicheren Überblick bekommen, wieviele Passagiere bereits auf ihrem Sitz sitzen und/oder in welchen Sitzreihen sich diese Sitze befinden. Insbesondere kann sich das Bordpersonal und/oder die Crew über den Personenfluss in der Kabine informieren und gegebenenfalls geeignete Maßnahmen treffen, um notwendige Abstände zwischen den Passagieren einzuhalten und/oder Staus zu vermeiden.

Besonders bevorzugt ist es im Rahmen der Erfindung, dass die mindestens eine Ausgabeeinrichtung zur Ausgabe des Freigabesignals und/oder des Verbotssignals durch den Rechner ansteuerbar ist. Hierzu ist der Rechner mit der mindestens einen Ausgabeeinrichtung z.B. über WiFi oder Bluetooth verbunden. Insbesondere kann das Bordpersonal und/oder die Crew die mindestens eine Ausgabeeinrichtung mittels des Rechners dazu ansteuern, das Verbotssignal oder das Freigabesignal für einen, einige oder alle Sitze auszugeben. Insbesondere kann das Bordpersonal und/oder die Crew auf Basis der auf dem Display oder Bildschirm ausgegebenen Sitzbelegung und/oder Abstände den Personenfluss in der Kabine durch Ausgabe des Freigabesignals oder des Verbotssignals steuern. Beispielsweise kann durch Ansteuerung des Verbotssignals vermieden werden, dass Passagiere nach der Landung von ihrem Platz aufstehen und auf den Gang treten, bevor das Flugzeug seine endgültige Parkposition erreicht hat und stillsteht.

Beispielsweise kann das Bordpersonal und/oder die Crew mittels des Rechners das Freigabesignal für bestimmte Sitze und/oder Sitzreihen des Sitzbereichs, z.B. zunächst für den äußersten Sitz jeder dritten Sitzreihe, ansteuern. Danach kann das Bordpersonal und/oder die Crew das Freigabesignal z.B. für einen mittleren Sitz jeder dritten Sitzreihe und im Anschluss für einen hinteren Sitz jeder dritten Sitzreihe ansteuern. Im Folgenden können z.B. einzelne Sitze anderer Sitzreihen sukzessive das Freigabesignal erhalten. Durch die sukzessive Ausgabe des Freigabesignals für bestimmte Sitze und Sitzreihen kann der notwendige Abstand zwischen den Passagieren z.B. bei einem Aussteigevorgang geregelt und eingehalten werden. Somit kann verhindert werden, dass insbesondere bei dem Aussteigevorgang alle Passagiere gleichzeitig von ihrem Sitz aufstehen, auf den Gang treten und/oder nach ihrem Gepäck suchen. Insbesondere kann vermieden werden, dass sich alle Passagiere gleichzeitig oder eng aufeinanderfolgend auf dem mindestens einen Gang zu der Flugzeugtür bewegen. Der Aussteigevorgang kann dadurch für die Passagiere sowie für die Crew und/oder das Bordpersonal entspannter und sicherer erfolgen.

Das Bordpersonal und/oder die Crew haben insbesondere die Möglichkeit durch situationsangepasste Ansteuerung der mindestens einen Ausgabeeinrichtung Einfluss zu nehmen und Staus und Schlange stehen auf dem mindestens einen Gang, z.B. beim Ein- oder Aussteigen der Passagiere, und/oder Menschenansammlungen in dem mindestens einen weiteren Aufenthalts- und/oder Funktionsbereich zu verhindern.

Die Überwachungsanordnung weist eine Steuerungseinrichtung auf. Die Steuerungseinrichtung ist signaltechnisch mit der Auswerteeinrichtung verbindbar und/oder verbunden. Insbesondere übermittelt die Auswerteeinrichtung den berechneten Abstand als Abstandssignale an die Steuerungseinrichtung. Die Steuerungseinrichtung ist bevorzugt dazu ausgebildet, die mindestens eine Ausgabeeinrichtung in Abhängigkeit des berechneten Abstands zur Ausgabe des Verbotssignals oder des Freigabesignals anzusteuern. In der Steuerungseinrichtung und/oder in der mindestens einen Ausgabeeinrichtung ist ein Steuerungsalgorithmus zur Ansteuerung durch die Steuerungseinrichtung hinterlegt. Im Speziellen ist die Ausgabeeinrichtung algorithmusbasiert und/oder manuell, mittels des von dem Bordpersonal und/oder der Crew bedienten Rechners, dazu ansteuerbar, das Freigabesignal oder das Verbotssignal auszugeben.

Vorteilhaft ist, dass der Personenfluss in der Kabine durch die Berechnung des Abstands und die davon abhängige Ausgabe des Freigabesignals oder des Verbotssignals, insbesondere in dem ersten und zweiten Überwachungsbereich und optional ergänzend in dem mindestens einen weiteren Überwachungsbereich, automatisch, insbesondere gemäß dem hinterlegten Algorithmus, gesteuert werden kann. Dadurch kann in vorteilhafter Weise erreicht werden, dass die Personen in den einzelnen Überwachungsbereichen zueinander ausreichend Abstand halten, insbesondere um ein Infektionsgeschehen, zum Beispiel im Falle einer Pandemie, vorzubeugen. Weiterhin kann eine Ansammlung von Personen in bestimmten Bereichen der Kabine und eine damit verbundene lange Wartezeit z.B. in dem Wartebereich vor dem Waschraum verhindert werden.

In einer bevorzugten Ausführungsform der Erfindung ist die Auswerteeinrichtung mit einem externen Gerät verbindbar und/oder verbunden. Das externe Gerät ist zum Beispiel einer externen Stelle, wie einem Bodenpersonal des Flugzeugs, zugeordnet. Vorzugsweise ist die Auswerteeinrichtung dazu ausgebildet, die Sitzbelegung der Sitze in dem Sitzbereich und/oder den berechneten Abstand zwischen den Personen in den Überwachungsbereichen an das externe Gerät zu übermitteln. Durch die Ausgabe dieser Information/en kann zum Beispiel ein Boardingprozess vor dem Abflug des Flugzeugs durch die externe Stelle unterstützt werden. Insbesondere kann auf dem externen Gerät ausgegeben werden, wie viele Personen gerade in das Flugzeug einsteigen, wie viele Personen bereits auf den Sitzen Platz genommen haben und/oder wie viele Personen sich in dem Gang oder in dem mindestens einen anderen Aufenthalts- und/oder Funktionsbereich der Kabine aufhalten. Somit kann vermieden werden, dass mehrere Personen auf engem Raum zusammenstehen und/oder sich lange Warteschlangen bilden. Insbesondere kann dadurch ein Komfort für die Passagiere beim Einsteigen in das Flugzeug und ein Schutz der Passagiere vor dem Infektionsgeschehen gewährleistet werden.

Eine Überwachungsanordnung zur Überwachung einer Kabine eines Flugzeugs ist zur Integration und/oder Verwendung in der Kabine nach der bisherigen Beschreibung und/oder nach einem der Ansprüche 1-6 ausgebildet.

Die Überwachungsanordnung umfasst eine erste Sensorvorrichtung. Die erste Sensorvorrichtung weist mehrere ersten Sensoren auf. Die erste Sensoreinrichtung und/oder die ersten Sensoren sind dazu ausgebildet, eine Position und/oder Anwesenheit mindestens einer Person in einem ersten Überwachungsbereich der Kabine als erste Sensordaten zu erfassen.

Die Überwachungsanordnung umfasst eine zweite Sensorvorrichtung. Die zweite Sensorvorrichtung weist einen oder mehrere zweite Sensoren auf. Die zweite Sensorvorrichtung und/oder der/die zweite/n Sensor/en sind dazu ausgebildet, eine Position und/oder Anwesenheit mindestens einer Person in einem zweiten Überwachungsbereich der Kabine als zweite Sensordaten zu erfassen.

Die Überwachungsanordnung weist eine Auswerteeinrichtung auf. Die Auswerteeinrichtung ist dazu ausgebildet, einen Abstand zwischen den Personen in den Überwachungsbereichen auf Basis der ersten und zweiten Sensordaten zu berechnen.

Die Überwachungsanordnung umfasst eine Steuerungseinrichtung. Die Steuerungseinrichtung ist dazu ausgebildet, mindestens eine Ausgabeeinrichtung auf Basis des berechneten Abstands anzusteuern.

Die Überwachungsanordnung umfasst mindestens eine Ausgabeeinrichtung. Die mindestens eine Ausgabeeinrichtung ist dazu ausgebildet, ein Freigabesignal oder ein Verbotssignal über eine Veränderung der Position und/oder Anwesenheit mindestens einer Person in den Überwachungsbereichen in Abhängigkeit des berechneten Abstands auszugeben.

Ein Flugzeug mit der Kabine nach der bisherigen Beschreibung und/oder nach einem der Ansprüche 1 bis 6 bildet einen weiteren Gegenstand der Erfindung.

Einen weiteren Gegenstand der Erfindung bildet ein Verfahren zur Überwachung einer Kabine eines Flugzeugs, mit der Überwachungsanordnung nach der bisherigen Beschreibung. Die zu überwachende Kabine ist nach der bisherigen Beschreibung und/oder nach einem der Ansprüche 1 bis 6 ausgebildet.

Im Rahmen des Verfahrens wird ein Freigabesignal oder ein Verbotssignal über eine Veränderung einer Position und/oder Anwesenheit mindestens einer Person in einem ersten Überwachungsbereich der Kabine und/oder in einem zweiten Überwachungsbereich der Kabine ausgegeben.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: eine Kabine eines Flugzeugs mit einem ersten Überwachungsbereich, welcher durch eine erste Sensorvorrichtung überwacht wird;
- Figur 2: die Kabine mit dem ersten Überwachungsbereich und mit einem zweiten und einem dritten Überwachungsbereich, welche durch eine zweite und dritte Sensoreinrichtung überwacht werden;
- Figur 3: ein schematischer Aufbau einer Überwachungsanordnung zur Überwachung von Überwachungsbereichen der Kabine.

Übereinstimmende oder gleiche Teile sind in den Figuren mit denselben Bezugszeichen versehen.

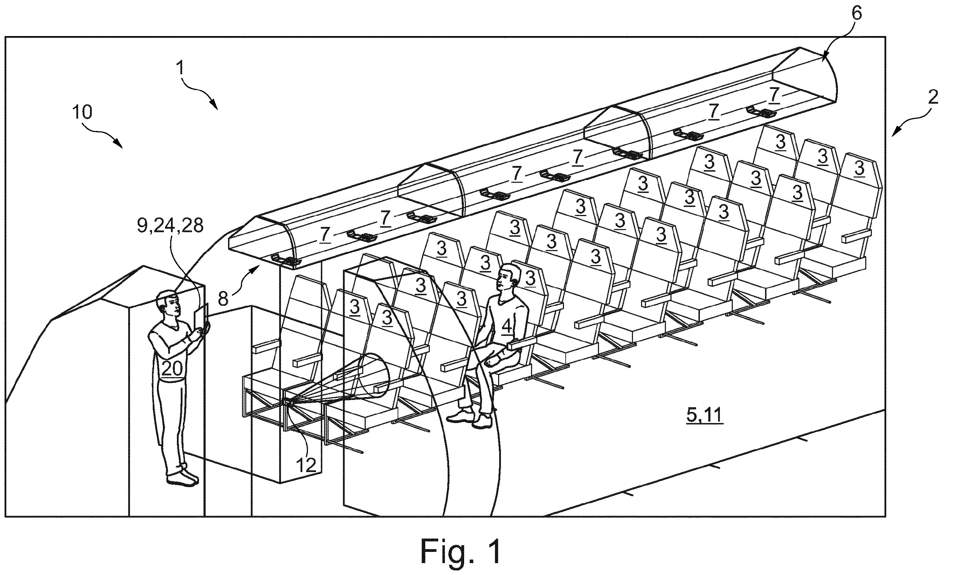

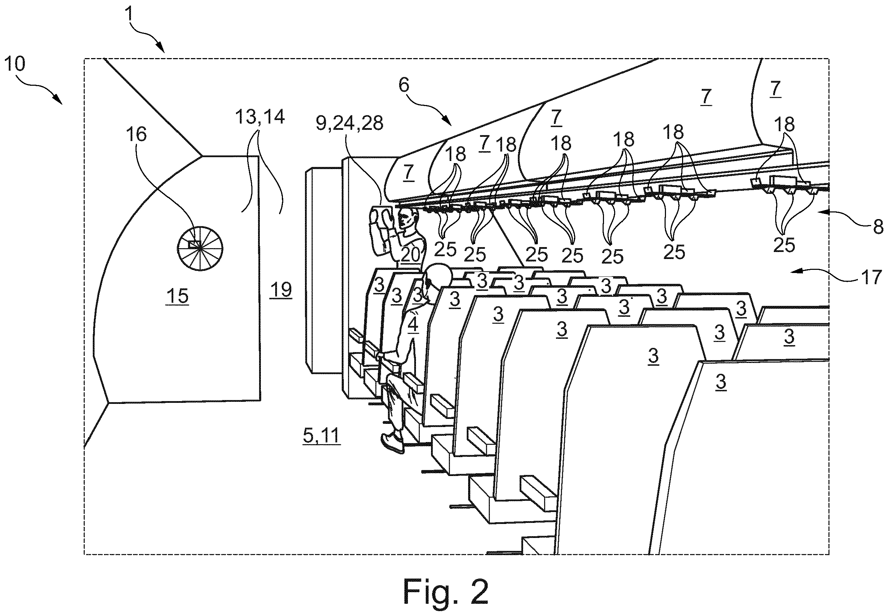

In der Figur 1 ist eine Kabine 1 eines Flugzeugs für die zivile Luftfahrt von schräg oben gezeigt. Die Kabine 1 ist als eine Passagierkabine ausgebildet. Sie weist einen Sitzbereich 2 mit einer Mehrzahl an Sitzen 3 auf, welche in Sitzreihen zu mehreren, z.B. drei Sitzen, angeordnet sind. Auf den Sitzen 3 können Passagiere 4 des Flugzeugs Platz nehmen. Die Kabine 1 kann einen, zwei oder mehr Sitzbereiche 2 umfassen. Zwischen den Sitzbereichen 2 oder neben dem/den Sitzbereich/en 2 verläuft ein Gang 5, den die Passagiere entlanggehen können, um zu ihren Sitzen 3 zu gelangen oder von diesen zu einem Aufenthalts- und/oder Funktionsbereich 13 (siehe Figur 2) der Kabine 1 zu gelangen.

Über dem Sitzbereich 2 ist ein Überkopfbereich 6 mit Überkopfgepäckfächern 7 angeordnet. Auf einer zu den Sitzen 3 gerichteten Unterseite des Überkopfbereichs 6 erstreckt sich ein Versorgungskanal 8 bzw. Passenger Supply Channel über die Sitzreihen hinweg. In dem Versorgungskanal 8 sind z.B. Lüftungsdüsen und Anschnallzeichen für jede Sitzreihe oder für jeden Sitz 3 der Sitzreihe integriert.

Die Kabine 1 umfasst einen mobilen Rechner 9, z.B. ein Tablet oder Laptop. Der Rechner 9 weist ein Display auf. Alternativ kann der Rechner auch als stationärer Rechner mit einem Bildschirm ausgebildet sein. Ein Mitglied des Bordpersonals 20, welches sich in der Kabine 1 befindet, nutzt den Rechner 9 und/oder bedient diesen.

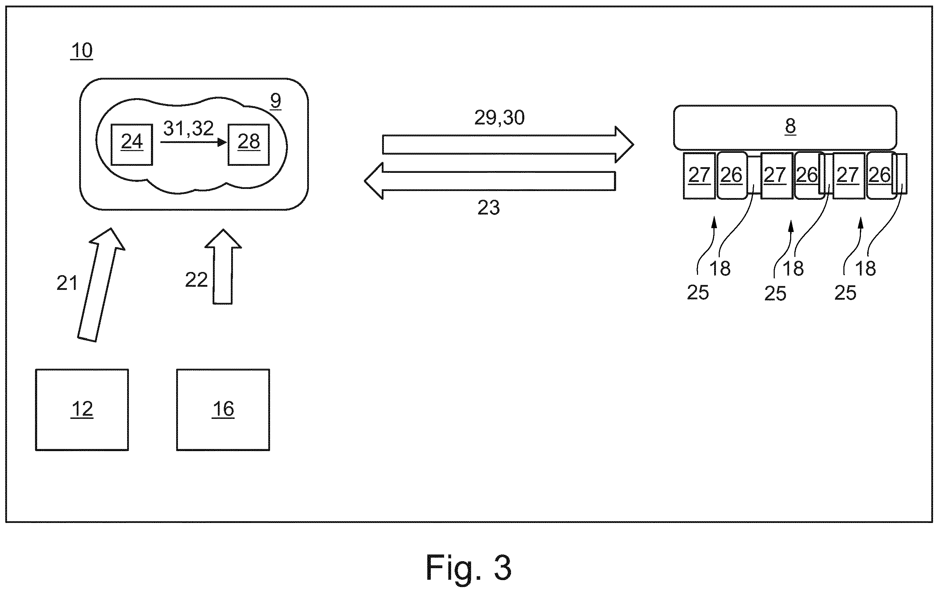

Die Kabine 1 weist eine Überwachungsanordnung 10 zur Überwachung von Überwachungsbereichen 11, 14, 17 der Kabine 1 auf. Ein schematischer Aufbau der Überwachungsanordnung 10 ist in der Figur 3 dargestellt.

Die Kabine 1 weist einen ersten Überwachungsbereich 11 auf. Der erste Überwachungsbereich 11 ist durch den Gang 5 gebildet und/oder er umfasst diesen.

Die Überwachungsanordnung 10 weist eine erste Sensorvorrichtung 12 auf. Die erste Sensorvorrichtung 12 umfasst einen oder mehrere erste Sensoren, welche wand-, decken- und/oder bodenseitig in der Kabine 1 angeordnet sind und ein Sensornetzwerk bilden können. Der oder die ersten Sensoren sind z.B. als optische Sensoren, z.B. als Kameras, optional als sogenannte Time-of-flight-Sensoren ausgebildet.

Die erste Sensorvorrichtung 12 erfasst eine Position und/oder Anwesenheit mindestens einer Person, insbesondere mindestens eines Passagiers 4 oder Mitglieds einer Crew oder des Bordpersonals 20, in dem ersten Überwachungsbereich 11 als erste Sensordaten 21. Insbesondere erfasst die erste Sensorvorrichtung 12, ob und/oder wieviele Personen sich auf dem Gang 5 aufhalten, ob und/oder wieviele Personen den Gang 5 betreten und ob und/oder wieviele Personen den Gang 5 verlassen.

In der Figur 2 ist die Kabine 1 in einer Sicht auf Rückseiten der Sitze 3 entlang des Gangs 5 gezeigt. Die Kabine 1 weist den Aufenthalts- und/oder Funktionsbereich 13 auf. Der Aufenthalts- und/oder Funktionsbereich 13 umfasst einen von dem Sitzbereich 2 räumlich abgetrennten Waschraum 15 und einen Wartebereich 19 vor dem Waschraum 15. Der Aufenthalts- und/oder Funktionsbereich 13 kann optional ergänzend einen nicht gezeigten Eingangs- und/oder Ausgangsbereich einer Flugzeugtüre umfassen.

Die Kabine 1 weist einen zweiten Überwachungsbereich 14 auf. Der zweite Überwachungsbereich 14 ist durch den Aufenthalts- und/oder Funktionsbereich 13 gebildet und/oder er umfasst diesen.

Die Überwachungsanordnung 10 weist eine zweite Sensorvorrichtung 16 auf. Die zweite Sensorvorrichtung 16 umfasst einen oder mehrere zweite Sensoren, welche ein Sensornetzwerk bilden können. Der oder die zweiten Sensoren sind z.B. als optische Sensoren, z.B. als Kameras, optional als sogenannte Time-of-flight-Sensoren ausgebildet. Der oder die zweiten Sensoren sind in dem Waschraum 15 wand-, decken-, oder bodenseitig angeordnet. Ein oder mehrere andere zweite Sensoren können optional ergänzend in dem Wartebereich 19 und/oder in dem Eingangs- und/oder Ausgangsbereich der Flugzeugtüre wand-, decken oder bodenseitig angeordnet sein. Ein oder mehrere zweite Sensoren können auch an einer Zugangstüre zu dem Waschraum 15 angeordnet sein. Diese können z.B. als Bewegungssensoren ausgebildet sein und eine Türöffnungs- und Schließbewegung erfassen, um dadurch eine Belegung oder Nichtbelegung des Waschraums 15 auswerten zu können. Der oder die zweiten an der Zugangstüre angeordneten Sensoren können aber auch als die optischen Sensoren ausgebildet sein.

Die zweite Sensorvorrichtung 16 erfasst eine Position und/oder Anwesenheit mindestens einer Person in dem zweiten Überwachungsbereich 14 als zweite Sensordaten 22. Somit erfasst die zweite Sensorvorrichtung 16, ob und/oder wieviele Personen sich in dem Aufenthalts- und/oder Funktionsbereich 13 aufhalten, ob und/oder wieviele Personen den Aufenthalts- und/oder Funktionsbereich 13 betreten und ob und/oder wieviele Personen diesen verlassen.

Die Kabine 1 weist mindestens einen weiteren Überwachungsbereich, insbesondere einen dritten Überwachungsbereich 17, auf. Der dritte Überwachungsbereich 17 ist durch den Sitzbereich 2 bzw. durch die Sitzbereiche 2 gebildet.

Die Überwachungsanordnung 10 weist mindestens eine weitere Sensorvorrichtung, insbesondere eine dritte Sensorvorrichtung 18 auf. Die dritte Sensorvorrichtung 18 umfasst mehrere dritte Sensoren, welche ein Sensornetzwerk bilden. Der oder die dritten Sensoren sind z.B. als optische Sensoren, z.B. als Kameras, optional als sogenannte Time-of-flight-Sensoren ausgebildet. Die dritten Sensoren sind in dem Versorgungskanal 8 angeordnet. Jedem Sitz 3 des Sitzbereichs 2, alternativ jeder Sitzreihe, ist ein dritter Sensor zugeordnet. Die dritte Sensorvorrichtung 18, insbesondere der dem jeweiligen Sitz 3 zugeordnete dritte Sensor, erfasst eine Sitzbelegung des Sitzes 3 durch eine Person als dritte Sensordaten 23.

Die Überwachungsvorrichtung 10 weist eine Auswerteeinrichtung 24 zur Auswertung der ersten, zweiten und dritten Sensordaten 21, 22, 23 auf. Die Auswerteeinrichtung 24 ist als ein Mikrokontroller ausgebildet. Sie ist in dem Rechner 9 integriert. Alternativ kann sie ein separates Bauteil sein, welches an den Rechner 9, z.B. über Funk oder eine Leitung, angebunden und/oder anbindbar ist.

Die Auswerteeinrichtung 24 berechnet auf Basis der ersten und zweiten Sensordaten 21, 22 und optional ergänzend auf Basis der dritten Sensordaten 21, 22 einen Abstand zwischen Personen, die sich in dem ersten und zweiten Überwachungsbereich 11, 14 und optional ergänzend in dem dritten Überwachungsbereich 17 aufhalten. Die Auswerteeinrichtung 24 wertet auch die Sitzbelegung der Sitze 3 aus, insbesondere wertet sie aus, ob und auf welchen Sitzen 3 des Sitzbereichs 2 eine Person sitzt und ob und welche/r Sitz/e unbesetzt sind.

Der Rechner 9 ist mit einem externen Gerät, z.B. einem weiteren Rechner, außerhalb des Flugzeugs, welcher z.B. von einem Bodenpersonal an einem Flughafen benutzt wird, signal- und/oder datentechnisch verbunden sein. Die ausgewertete Sitzbelegung und optional ergänzend der berechnete Abstand der Personen in den Überwachungsbereichen 11, 14, 17 kann an den weiteren Rechner übermittelt werden. Dadurch kann das Bodenpersonal z.B. bei einem Boardingprozess einen Eindruck darüber gewinnen, wie schnell sich die Passagiere in der Kabine 1 auf ihren Sitz 3 setzen, welche Sitze 3 bereits besetzt sind, wieviele Personen sich mit welchem Abstand in dem Gang 5, Wartebereich 19 und/oder in dem Eingangs- und/oder Ausgangsbereich der Flugzeugtür aufhalten. Somit kann das Bodenpersonal den Boardingprozess in vorteilhafter Weise geregelter, insbesondere unter Vermeidung eines Passagierstaus in den Überwachungsbereichen und/oder unter Vermeidung von Warteschlagen vor der Flugzeugtür gestalten.

Die Überwachungsvorrichtung 10 umfasst mehrere Ausgabeeinrichtungen 25. Die Ausgabeeinrichtungen 25 sind über jeder Sitzreihe des Sitzbereichs 2 in dem Versorgungskanal 8 angeordnet. Jeweils eine der Ausgabeeinrichtungen 25 ist genau einem Sitz 3 der Sitzreihe zugeordnet.

Die Ausgabeeinrichtungen 25 sind als Ampeln zur Ausgabe von zwei oder mehr verschiedenfarbigen optischen Signalen ausgebildet. Eine erste mittels der Ampel ausgegebenen Signalfarbe, z.B. grün, bildet ein Freigabesignal 26. Eine zweite mittels der Ampel ausgegebenen Signalfarbe, z.B. rot, bildet ein Verbotssignal 27. Optional kann eine dritte Signalfarbe, z.B. orange, ausgegeben werden, die ein Wartesignal bis zum Wechsel zwischen dem Freigabesignal 26 und dem Verbotssignal 27 bilden kann. Möglich ist auch, dass die Ausgabeeinrichtungen 25 zur Ausgabe von akustischen Signalen ausgebildet sind, welche auf die Ausgabe und den Wechsel zwischen den optischen Signalen hinweisen können.

Das Freigabesignal 26 und das Verbotssignal 27 sind zur Einflussnahme auf die Position und/oder Anwesenheit mindestens einer Person in den Überwachungsbereichen 11,14, 17 vorgesehen. Das Verbotssigal 27 signalisiert dem Passagier auf dem entsprechenden Sitz 3, dass er sitzenbleiben muss und den Sitz 3 nicht verlassen darf. Das Freigabesignal 26 signalisiert dem Passagier auf dem entsprechenden Sitz 3, dass er aufstehen und den Sitz 3 verlassen darf.

Die Überwachungsanordnung 10 umfasst eine Steuerungseinrichtung 28 zur Ansteuerung der Ausgabeeinrichtungen 25 auf Basis des berechneten Abstands zwischen den Personen in den Überwachungsbereichen 11, 14,17 auf. Die Steuerungseinrichtung 28 ist in dem Rechner 9 integriert oder mit diesem verbindbar oder verbunden. In der Steuerungseinrichtung 28 ist ein Steuerungsalgorithmus hinterlegt, mittels dem die Ausgabeeinrichtungen 25 auf Basis des berechneten Abstands mit alogithmusbasierten Steuerungssignalen 29 ansteuerbar sind.

Beispielsweise umfasst der Steuerungsalgorithmus Grenzwerte für einen minimalen Abstand zwischen je zwei Personen in einem, mehreren oder allen Überwachungsbereichen 11, 14, 17. Wird der Grenzwert erreicht oder unterschritten, so steuert die Steuerungseinrichtung 28 die Ausgabe des Verbotssignals 27 für die entsprechenden Sitze 3 an. Ist der Grenzwert nicht erreicht, so steuert die Steuerungseinrichtung das Freigabesignal 26 für die entsprechenden Sitze 3 an. Die Steuerungseinrichtung 28 kann gemäß dem Steuerungsalgorithmus z.B. auch berücksichtigen, welchen Abstand jeweils zwei Personen zu bestimmten Sitzen 3 und/oder Sitzreihen aufweisen, sodass die Steuerungseinrichtung dementsprechend an bestimmten Sitzreihen das Freigabesignal 26 ansteuern kann und an anderen Sitzreihen das Verbotssignal 27.

Somit kann in vorteilhafter Weise eine enge Ansammlung von Personen in dem ersten und zweiten Überwachungsbereich 11, 14 vermieden werden. Es kann dadurch gewährleistet werden, dass Abstandsregeln z.B. zur Verringerung eines Infektionsgeschehens bei einer Pandemie oder bei ähnlichen Situationen, eingehalten werden.

Das Mitglied des Bordpersonals 20 kann mittels des Rechners 9 und insbesondere mittels der darin integrierten oder an diesen angebundene Steuerungseinrichtung 28, die Ausgabeeinrichtungen 25 auch durch Vornahme manueller Steuerungsbefehle ansteuern. Hierzu können der berechnete Abstand und/oder die ausgewertete Sitzbelegung auf dem Display angezeigt werden, sodass das Mitglied des Bordpersonals 20 davon Kenntnis nehmen kann. Die Steuerungsbefehle können über das Display als Touchscreen oder über eine Tastatur etc. eingegeben werden.

Zum Beispiel kann das Mitglied des Bordpersonals 20 durch die manuelle Steuerung der Ausgabeeinrichtungen 25 Einfluss auf einen Aussteigeprozess der Passagiere 4 aus dem Flugzeug nehmen. Bei einer Ansteuerung des Freigabesignals 26 z.B. nur für die Sitze 3 jeder dritten Sitzreihe des Sitzbereichs 2 kann insbesondere erreicht werden, dass nicht alle Passagiere 4 gleichzeitig auf den Gang 5 drängen, um ihr Gepäck aus den Überkopfstaufächern 7 zu entnehmen und sich zu der Flugzeugtür zu bewegen. Der Aussteigevorgang kann geordnet vor sich gehen und sich somit entspannter und angenehmer für die Passgiere 4 und das Bordpersonal 20 gestalten. Außerdem können enge Ansammlungen vermieden und ggf. notwendige Abstandregeln in dem ersten und zweiten Überwachungsbereich 11, 14 eingehalten werden.

Wie aus der Figur 3 zu entnehmen, ist die Auswerteeinrichtung 24 mit der ersten, zweiten und dritten Sensorvorrichtung 12,16,18 signaltechnisch verbunden. Die Sensorvorrichtungen 12, 16, 18 übermitteln die erfassten ersten, zweiten und dritten Sensordaten 21, 22, 23 an die Auswerteeinrichtung 24.

Die Auswerteeinrichtung 24 ist signaltechnisch an die Steuerungseinrichtung 28 angebunden. Sie übermittelt den berechneten Abstand als Abstandssignale 31 an die Steuerungseinrichtung 28. Sie kann den berechneten Abstand als Abstandssignale auch zur Anzeige auf dem Display der Rechners 9 übermitteln. Weiterhin übermittelt die Auswerteeinrichtung 24 die ausgewertete Sitzbelegung als Sitzbelegungssignale 32 an die Steuerungseinrichtung 28 und/oder zur Anzeige auf dem Display des Rechner 9.

Die Steuerungseinrichtung 28 ist über Funk, insbesondere WiFi oder Bluetooth, mit den Ausgabeeinrichtungen 25 signaltechnisch verbunden ist. Zur Ansteuerung sendet die Steuerungseinrichtung 28 die algorithmusbasierten Steuersignale 29 oder auf den manuellen Steuerbefehlen basierende Steuersignale 30 an die Ausgabeeinrichtungen 24.

### Bezugszeichenliste

- 1: Kabine
- 2: Sitzbereich
- 3: Sitz
- 4: Passagier
- 5: Gang
- 6: Überkopfbereich
- 7: Überkopfstaufächer
- 8: Versorgungskanal
- 9: Rechner
- 10: Überwachungsanordnung
- 11: Erster Überwachungsbereich
- 12: Erste Sensorvorrichtung
- 13: Aufenthalts- und/oder Funktionsbereich
- 14: Zweiter Überwachungsbereich
- 15: Waschraum
- 16: Zweite Sensorvorrichtung
- 17: Dritter Überwachungsbereich
- 18: Dritte Sensorvorrichtung
- 19: Wartebereich
- 20: Bordpersonal
- 21: Erste Sensordaten
- 22: Zweite Sensordaten
- 23: Dritte Sensordaten
- 24: Auswerteeinrichtung
- 25: Ausgabeeinrichtungen
- 26: Freigabesignal
- 27: Verbotssignal
- 28: Steuerungseinrichtung
- 29: Algorithmusbasierte Steuersignale
- 30: Manuelle Steuersignale
- 31: Abstandssignale
- 32: Sitzbelegungssignale

## Patentansprüche

1. Kabine (1) für ein Flugzeug,
mit einem ersten Überwachungsbereich (11),
mit einem zweiten Überwachungsbereich (14),
mit einer Überwachungsanordnung (10) zur Überwachung des ersten Überwachungsbereichs (11) und des zweiten Überwachungsbereichs (14),
wobei die Überwachungsanordnung (10) mindestens eine Ausgabeeinrichtung (25) umfasst,
wobei die mindestens eine Ausgabeeinrichtung (25) dazu ausgebildet und/oder angeordnet ist, ein Freigabesignal (26) und ein Verbotssignal (27) über eine Veränderung einer Position und/oder Anwesenheit mindestens einer Person in dem ersten Überwachungsbereich (11) und/oder in dem zweiten Überwachungsbereich (14) auszugeben,
wobei die Kabine (1) einen Sitzbereich (2) mit mehreren Sitzen (3) umfasst, wobei die Überwachungsanordnung (10) mehrere Ausgabeeinrichtungen (25) umfasst, wobei jedem Sitz (3) des Sitzbereichs (2) eine Ausgabeeinrichtung (25) zugeordnet ist,
wobei das Verbotssignal (27) dem Passagier auf dem entsprechenden Sitz (3) signalisiert, dass er sitzenbleiben muss und den Sitz (3) nicht verlassen darf, wobei das Freigabesignal (26) dem Passagier auf dem entsprechenden Sitz (3) signalisiert, dass er aufstehen und den Sitz (3) verlassen darf,
wobei der erste Überwachungsbereich (11) mindestens ein Gang (5) neben oder zwischen den Sitzen (3) des Sitzbereichs (2) ist und der zweite Überwachungsbereich (14) mindestens einen Aufenthalts- und/oder Funktionsbereich (13) der Kabine (1) umfasst,
wobei die Kabine (1) mindestens einen weiteren Überwachungsbereich (17) aufweist, wobei der mindestens eine weitere Überwachungsbereich (17) den Sitzbereich (2) umfasst,
wobei die Überwachungsanordnung (10) eine erste Sensorvorrichtung (12) und eine zweite Sensorvorrichtung (16) umfasst, wobei die erste Sensorvorrichtung (12) dazu ausgebildet und/oder angeordnet ist, die Anwesenheit und/oder Position mindestens einer Person in dem ersten Überwachungsbereich (11) als erste Sensordaten (21) zu erfassen und wobei die zweite Sensorvorrichtung (16) dazu ausgebildet ist, die Anwesenheit und/oder Position mindestens einer Person in dem zweiten Überwachungsbereich (14) als zweite Sensordaten (22) zu erfassen und wobei die Überwachungsanordnung (10) mindestens eine weitere Sensorvorrichtung (18) umfasst, wobei die mindestens eine weitere Sensorvorrichtung (18) dazu ausgebildet ist, eine Position und/oder Anwesenheit mindestens einer Person in dem mindestens einen weiteren Überwachungsbereich (17) als weitere Sensordaten (23) zu erfassen,
wobei die Überwachungsanordnung (10) eine Auswerteeinrichtung (24) umfasst,
wobei die Auswerteeinrichtung (24) dazu ausgebildet ist, einen Abstand zwischen mindestens einer Person in einem der Überwachungsbereiche (11, 14, 17) und mindestens einer anderen Person in einem anderen der Überwachungsbereiche (11, 14, 17) auf Basis der ersten Sensordaten (21), der zweiten Sensordaten (22) und/oder der weiteren Sensordaten (23) zu berechnen,
wobei die Überwachungsanordnung (10) eine Steuerungseinrichtung (28) umfasst, wobei die Steuerungseinrichtung (28) mit der Auswerteeinrichtung (26) signaltechnisch verbindbar und/oder verbunden ist, wobei die Steuerungseinrichtung (28) ausgebildet ist, die mindestens eine Ausgabeeinrichtung (25) zur Ausgabe des Freigabesignals (26) oder des Verbotssignals (27) in Abhängigkeit des berechneten Abstands anzusteuern,
wobei in der Steuerungseinrichtung (28) ein Steuerungsalgorithmus hinterlegt ist, mittels dem die Ausgabeeinrichtungen (25) auf Basis des berechneten Abstands mit algorithmusbasierten Steuerungssignalen (29) ansteuerbar sind, wobei der Steuerungsalgorithmus Grenzwerte für einen minimalen Abstand zwischen je zwei Personen in einem, mehreren oder allen Überwachungsbereichen (11, 14, 17) umfasst und wie folgt ausgebildet ist:
- wird der Grenzwert erreicht oder unterschritten, so steuert die Steuerungseinrichtung (28) die Ausgabe des Verbotssignals (27) für die entsprechenden Sitze (3) an,
- ist der Grenzwert nicht erreicht, so steuert die Steuerungseinrichtung (28) das Freigabesignal (26) für die entsprechenden Sitze (3) an.

2. Kabine (1) nach Anspruch 1, **dadurch gekennzeichnet, dass** das Freigabesignal (26) und/oder das Verbotssignal (27) ein optisches Signal ist.

3. Kabine (1) nach Anspruch 1 oder 2, **dadurch gekennzeichnet, dass** die mindestens eine Ausgabeeinrichtung (25) eine Ampel ist, welche dazu ausgebildet ist, eine erste Signalfarbe als das Freigabesignal (26) anzuzeigen und eine zweite Signalfarbe als das Verbotssignal (27) anzuzeigen.

4. Kabine (1) nach einem der vorhergehenden Ansprüche, **dadurch gekennzeichnet, dass** die Auswerteeinrichtung (24) dazu ausgebildet ist, eine Sitzbelegung der Sitze (3) auf Basis der weiteren Sensordaten (23) auszuwerten.

5. Kabine (1) nach Anspruch 4, **dadurch gekennzeichnet, dass** die Kabine (1) einen Rechner (9) umfasst und die Auswerteeinrichtung (24) in dem mobilen oder fest installierten Rechner (9) integriert ist und/oder mit diesem verbunden ist, wobei der Rechner (9) ein Display oder einen Bildschirm aufweist, wobei die ausgewertete Sitzbelegung und/oder der berechnete Abstand auf dem Display oder auf dem Bildschirm abrufbar und/oder anzeigbar ist.

6. Kabine (1) nach Anspruch 5, **dadurch gekennzeichnet, dass** die Auswerteeinrichtung (26) und/oder der Rechner (9) mit einem externen Gerät außerhalb des Flugzeugs verbindbar und/oder verbunden ist, wobei die Auswerteeinrichtung (26) und/oder der Rechner (9) dazu ausgebildet ist/sind, die Sitzbelegung und/oder den berechneten Abstand an das externe Gerät zu übermitteln.

7. Flugzeug mit der Kabine (1) nach einem der Ansprüche 1 bis 6.

8. Verfahren zur Überwachung einer Kabine (1) nach einem der Ansprüche 1 bis 6 eines Flugzeugs, wobei das Freigabesignal (26) und/oder das Verbotssignal (27) über eine Veränderung einer Position und/oder Anwesenheit mindestens einer Person in einem ersten Überwachungsbereich (11) der Kabine (1) und/oder in einem zweiten Überwachungsbereich (14) der Kabine (1) ausgegeben wird, wobei
- wenn der Grenzwert erreicht oder unterschritten wird, die Steuerungseinrichtung (28) die Ausgabe des Verbotssignals (27) für die entsprechenden Sitze (3) ansteuert,
- wenn der Grenzwert nicht erreicht ist, die Steuerungseinrichtung (28) das Freigabesignal (26) für die entsprechenden Sitze (3) ansteuert.

## Claims

1. Cabin (1) for an aircraft,
having a first monitoring area (11),
having a second monitoring area (14),
having a monitoring assembly (10) for monitoring the first monitoring area (11) and the second monitoring area (14),
wherein the monitoring assembly (10) comprises at least one output device (25),
wherein the at least one output device (25) is designed and/or arranged to output a clearance signal (26) and a restraint signal (27) for a change of position and/or presence of at least one person in the first monitoring area (11) and/or in the second monitoring area (14),
wherein the cabin (1) comprises a seat area (2) having multiple seats (3), the monitoring assembly (10) comprising multiple output devices (25), each seat (3) of the seat area (2) having an associated output device (25),
wherein the restraint signal (27) signals to the passenger in the applicable seat (3) that they must remain seated and may not leave the seat (3), the clearance signal (26) signalling to the passenger in the applicable seat (3) that they may stand up and leave the seat (3),
wherein the first monitoring area (11) is at least one aisle (5) beside or between the seats (3) of the seat area (2) and the second monitoring area (14) comprises at least one waiting and/or function area (13) of the cabin (1),
wherein the cabin (1) has at least one further monitoring area (17), the at least one further monitoring area (17) comprising the seat area (2),
wherein the monitoring assembly (10) comprises a first sensor apparatus (12) and a second sensor apparatus (16), the first sensor apparatus (12) being designed and/or arranged to detect the presence and/or position of at least one person in the first monitoring area (11) as first sensor data (21) and the second sensor apparatus (16) being designed to detect the presence and/or position of at least one person in the second monitoring area (14) as second sensor data (22) and the monitoring assembly (10) comprising at least one further sensor apparatus (18), the at least one further sensor apparatus (18) being designed to detect a position and/or presence of at least one person in the at least one further monitoring area (17) as further sensor data (23),
wherein the monitoring assembly (10) comprises an evaluation device (24),
wherein the evaluation device (24) is designed to calculate a distance between at least one person in one of the monitoring areas (11, 14, 17) and at least one other person in another of the monitoring areas (11, 14, 17) on the basis of the first sensor data (21), the second sensor data (22) and/or the further sensor data (23),
wherein the monitoring assembly (10) comprises a control device (28), the control device (28) being able to be connected and/or being connected to the evaluation device (26) for signal transfer purposes, the control device (28) being designed to drive the at least one output device (25) to output the clearance signal (26) or the restraint signal (27) on the basis of the calculated distance,
wherein the control device (28) stores a control algorithm by means of which the output devices (25) are able to be driven by algorithm-based control signals (29) on the basis of the calculated distance, the control algorithm comprising limit values for a minimum distance between two persons in each of one, multiple or all monitoring areas (11, 14, 17) and being designed as follows:
- if the limit value is reached or not maintained, the control device (28) triggers output of the restraint signal (27) for the applicable seats (3),
- if the limit value is not reached, the control device (28) triggers the clearance signal (26) for the applicable seats (3).

2. Cabin (1) according to Claim 1, **characterized in that** the clearance signal (26) and/or the restraint signal (27) is a visual signal.

3. Cabin (1) according to Claim 1 or 2, **characterized in that** the at least one output device (25) is a set of traffic lights designed to display a first signal colour as the clearance signal (26) and to display a second signal colour as the restraint signal (27).

4. Cabin (1) according to one of the preceding claims, **characterized in that** the evaluation device (24) is designed to evaluate a seat occupancy of the seats (3) on the basis of the further sensor data (23).

5. Cabin (1) according to Claim 4, **characterized in that** the cabin (1) comprises a computer (9) and the evaluation device (24) is integrated in the mobile or permanently installed computer (9) and/or is connected to said computer, the computer (9) having a display or a screen, the evaluated seat occupancy and/or the calculated distance being able to be called up and/or displayed on the display or on the screen.

6. Cabin (1) according to Claim 5, **characterized in that** the evaluation device (26) and/or the computer (9) is able to be connected and/or is connected to an external device outside the aircraft, the evaluation device (26) and/or the computer (9) being designed to relay the seat occupancy and/or the calculated distance to the external device.

7. Aircraft having the cabin (1) according to one of Claims 1 to 6.

8. Method for monitoring a cabin (1) according to one of Claims 1 to 6 of an aircraft, wherein the clearance signal (26) and/or the restraint signal (27) is output for a change of position and/or presence of at least one person in a first monitoring area (11) of the cabin (1) and/or in a second monitoring area (14) of the cabin (1), wherein
- if the limit value is reached or not maintained, the control device (28) triggers output of the restraint signal (27) for the applicable seats (3),
- if the limit value is not reached, the control device (28) triggers the clearance signal (26) for the applicable seats (3).

## Revendications

1. Cabine (1) destinée à un avion, comprenant
une première zone de surveillance (11),
une deuxième zone de surveillance (14),
un agencement de surveillance (10) pour surveiller la première zone de surveillance (11) et la deuxième zone de surveillance (14),
dans laquelle l'agencement de surveillance (10) comprend au moins un dispositif de sortie (25),
dans laquelle ledit au moins un dispositif de sortie (25) est réalisé et/ou agencé pour émettre un signal d'autorisation (26) et un signal d'interdiction (27) concernant un changement d'une position et/ou la présence d'au moins une personne dans la première zone de surveillance (11) et/ou dans la deuxième zone de surveillance (14),
dans laquelle la cabine (1) comprend une zone de sièges (2) avec plusieurs sièges (3), l'agencement de surveillance (10) comprenant plusieurs dispositifs de sortie (25), un dispositif de sortie (25) étant attribué à chaque siège (3) de la zone de sièges (2),
dans laquelle le signal d'interdiction (27) signale au passager sur le siège (3) correspondant qu'il doit rester assis et ne doit pas quitter le siège (3), le signal d'autorisation (26) signalant au passager sur le siège (3) correspondant qu'il peut se lever et peut quitter le siège (3),
dans laquelle la première zone de surveillance (11) est au moins un couloir (5) à côté ou entre les sièges (3) de la zone de sièges (2) et la deuxième zone de surveillance (14) comprend au moins une zone de séjour et/ou fonctionnelle (13) de la cabine (1),
dans laquelle la cabine (1) présente au moins une zone de surveillance supplémentaire (17), ladite au moins une zone de surveillance supplémentaire (17) comprenant la zone de sièges (2),
dans laquelle l'agencement de surveillance (10) comprend un premier dispositif capteur (12) et un deuxième dispositif capteur (16), dans laquelle le premier dispositif capteur (12) est réalisé et/ou disposé pour détecter la présence et/ou la position d'au moins une personne dans la première zone de surveillance (11) en tant que premières données de capteur (21), et dans laquelle le deuxième dispositif capteur (16) est réalisé pour détecter la présence et/ou la position d'au moins une personne dans la deuxième zone de surveillance (14) en tant que deuxièmes données de capteur (22), et dans laquelle l'agencement de surveillance (10) comprend au moins un dispositif capteur supplémentaire (18), dans laquelle ledit au moins un dispositif capteur supplémentaire (18) est réalisé pour détecter une position et/ou la présence d'au moins une personne dans ladite au moins une zone de surveillance supplémentaire (17) en tant que données de capteur supplémentaires (23),
dans laquelle l'agencement de surveillance (10) comprend un dispositif d'évaluation (24),
dans laquelle le dispositif d'évaluation (24) est réalisé pour calculer une distance entre au moins une personne dans l'une des zones de surveillance (11, 14, 17) et au moins une autre personne dans une autre des zones de surveillance (11, 14, 17) sur la base des premières données de capteur (21), des deuxièmes données de capteur (22) et/ou des données de capteur supplémentaires (23),
dans laquelle l'agencement de surveillance (10) comprend un dispositif de commande (28), le dispositif de commande (28) pouvant être relié et/ou étant relié au dispositif d'évaluation (26) en termes de signal, le dispositif de commande (28) étant réalisé pour piloter ledit au moins un dispositif de sortie (25) afin d'émettre le signal d'autorisation (26) ou le signal d'interdiction (27) en fonction de la distance calculée,
dans laquelle un algorithme de commande est mémorisé dans le dispositif de commande (28), au moyen duquel les dispositifs de sortie (25) peuvent être pilotés sur la base de la distance calculée avec des signaux de commande (29) à base d'algorithme, dans laquelle l'algorithme de commande comprend des valeurs limites pour une distance minimale entre respectivement deux personnes dans une, plusieurs ou toutes les zones de surveillance (11, 14, 17) et est réalisé comme suit :
- si la valeur limite est atteinte ou soupassée, alors le dispositif de commande (28) pilote la sortie du signal d'interdiction (27) pour les sièges (3) correspondants,
- si la valeur limite n'est pas atteinte, alors le dispositif de commande (28) pilote le signal d'autorisation (26) pour les sièges (3) correspondants.

2. Cabine (1) selon la revendication 1, **caractérisée en ce que** le signal d'autorisation (26) et/ou le signal d'interdiction (27) sont des signaux optiques.

3. Cabine (1) selon la revendication 1 ou 2, **caractérisée en ce que** ledit au moins un dispositif de sortie (25) est un feu de signalisation qui est réalisé pour afficher une première couleur de signalisation en tant que signal d'autorisation (26) et une deuxième couleur de signalisation en tant que signal d'interdiction (27).

4. Cabine (1) selon l'une quelconque des revendications précédentes, **caractérisée en ce que** le dispositif d'évaluation (24) est réalisé pour évaluer une occupation de siège des sièges (3) sur la base des données de capteur supplémentaires (23).

5. Cabine (1) selon la revendication 4, **caractérisée en ce que** la cabine (1) comprend un ordinateur (9), et le dispositif d'évaluation (24) est intégré dans l'ordinateur (9) de manière mobile ou installé à demeure et/ou est relié à celui-ci, dans laquelle l'ordinateur (9) présente un affichage ou un écran, dans laquelle l'occupation de siège évaluée et/ou la distance calculée peuvent être consultées et/ou affichées sur l'affichage ou à l'écran.

6. Cabine (1) selon la revendication 5, **caractérisée en ce que** le dispositif d'évaluation (26) et/ou l'ordinateur (9) peuvent être reliés et/ou sont reliés à un appareil externe à l'extérieur de l'avion, dans laquelle le dispositif d'évaluation (26) et/ou l'ordinateur (9) sont réalisés pour transmettre l'occupation de siège et/ou la distance calculée à l'appareil externe.

7. Avion comprenant la cabine (1) selon l'une quelconque des revendications 1 à 6.

8. Procédé permettant de surveiller une cabine (1) selon l'une quelconque des revendications 1 à 6 d'un avion, dans lequel le signal d'autorisation (26) et/ou le signal d'interdiction (27) concernant un changement d'une position et/ou la présence d'au moins une personne dans une première zone de surveillance (11) de la cabine (1) et/ou dans une deuxième zone de surveillance (14) de la cabine (1) sont émis, dans lequel
- si la valeur limite est atteinte ou soupassée, alors le dispositif de commande (28) pilote la sortie du signal d'interdiction (27) pour les sièges (3) correspondants,
- si la valeur limite n'est pas atteinte, alors le dispositif de commande (28) pilote le signal d'autorisation (26) pour les sièges (3) correspondants.
